# EUROPEAN PATENT SPECIFICATION

(11) **EP 2 456 269 B1**
(45) Date of publication and mention of the grant of the patent: **17.01.2018**
(21) Application number: 10847728.2
(22) Date of filing: 26.08.2010
(51) Int. Cl.: H04W 60/06

(54) **PROCESSING METHOD AND SYSTEM FOR NETWORK SIDE TRIGGERING LOG-OUT IN HANDOVER PROCESS**
VERARBEITUNGSVERFAHREN UND -SYSTEM ZUR NETZWERKSEITIGEN AUSLÖSUNG EINES LOGOUTS IN EINEM ÜBERGABEVERFAHREN
PROCÉDÉ ET SYSTÈME DE TRAITEMENT PERMETTANT À UN CÔTÉ RÉSEAU DE DÉCLENCHER UNE DÉCONNEXION DANS UN PROCESSUS DE TRANSFERT INTERCELLULAIRE

(30) Priority: 16.03.2010 CN 201010132326
(43) Date of publication of application: 23.05.2012
(73) Proprietor: ZTE Corporation, Shenzhen, Guangdong 518057 (CN)
(72) Inventor: PANG, Zaihai, Shenzhen Guangdong 518057 (CN); LIU, Junyi, Shenzhen Guangdong 518057 (CN); CAI, Jiannan, Shenzhen Guangdong 518057 (CN)
(74) Representative: Manitz Finsterwald Patentanwälte PartmbB
(86) International application number: PCT/CN2010/076381
(87) International publication number: WO 2011/113259

(56) References cited:
- WO-A1-2008/084942
- CN-A- 101 400 154
- CN-A- 101 640 912
- CN-A- 101 662 830
- CN-A- 101 815 349
- "WiMAX Forum Network Architecture (Stage 3: Detailed Protocols and Procedures)", 1 January 2008 (2008-01-01), WIMAX FORUM NETWORK ARCHITECTURE (STAGE 3: DETAILED PROTOCOLS AND PROCEDU,, XP008167754, * page 263 - page 387 *

## Description

### Technical Field

The present invention relates to Worldwide Interoperability for Microwave Access (WIMAX) technique, especially, to a processing method and system for the network side triggering a disconnection in a handover process.

### Background of the Related Art

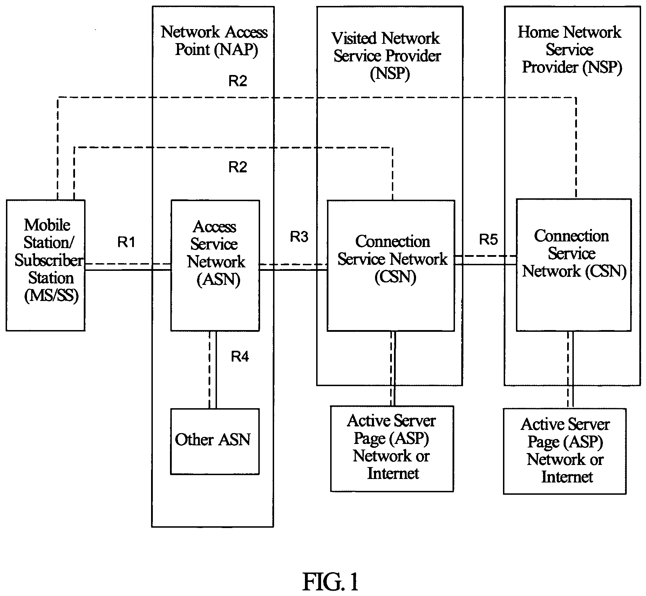

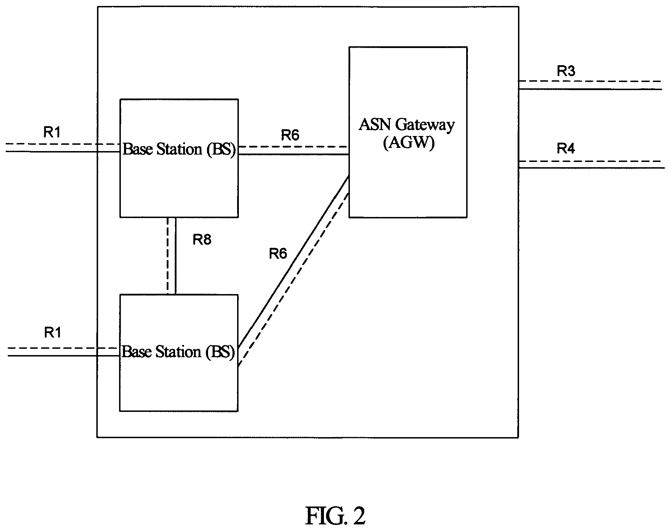

With the development of the demand for the mobile stations and the wide application of the wireless technologies, the development of the WIMAX technology is more and more rapidly, and the prospect is wider and wider, the WIMAX technology is based on IEEE802.16 standard Wireless Metropolitan Area Networking (WMAN) technology. FIG. 1 is the system architectural schematic diagram of the prior WIMAX system, as shown in FIG. 1, the prior WIMAX system usually comprises: a Connectivity Service Network (CSN), a Mobile Station/Subscriber Station (MS/SS), a Access Service Network (ASN), wherein, an ASN is the set of the corresponding message flows of function entities related to the access service in the WIMAX network system, and the connection between the ASNs is a R4 port, FIG 2 is the structural schematic diagram of the prior access service network, as shown in FIG 2, the ASN comprises: an ASN Gateway (AGW) and a Base Station (BS), and they are connected by the internal port R6, wherein, the R6 port is composed of a series of controls and loading plane protocols, further, an AGW comprises a Certification Authority Function Entity (Authenticator), a Data Path Function Entity (DPF) and a Location Management Function Entity (PC/LR), and these three function entities can be in an identical physical entity, or can also be in the different physical entities.

In practical application, the BS mainly provides the functions such as the wireless resource management, power measurement and control, and air-interface data compression and encryption; in the ASN-GW, the Authenticator mainly provides functions of authentication, authorization and accounting, the DPF mainly provides the path management, assists a high layer to set up 3 layers' connection with the MS and so on, the PC/LR mainly provides functions such as location management and paging, etc; the CSN is mainly comprised of Function entities such as a Home Agent (HA), a Dynamic Host Configuration Protocol (DHCP) server, and a Authentication-Authorization-Accounting (AAA) server, etc, which mainly provide functions such as accounting, authentication, authorization, distributing IP address and Internet service access, etc.

The following is the introduction to the situation of a disconnection at the network side in an identical ASN when the handover flow of trans-ASN happens in the present protocol.

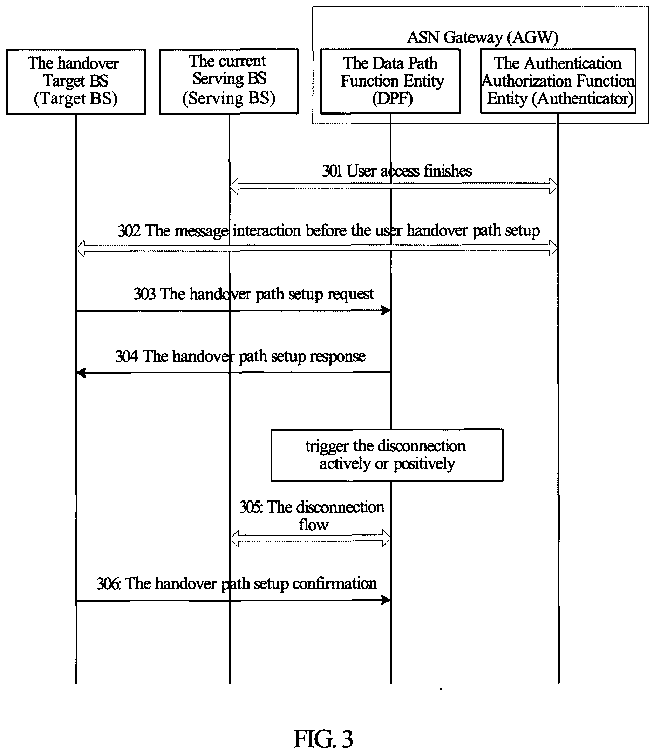

FIG. 3 is a schematic diagram of a processing flow of the network side triggering a disconnection in the process of a user handover in an identical ASN in the prior art, as shown in FIG. 3, in the process of a user handover in an identical ASN, the processing flow of the network side triggering a disconnection comprises the following steps:
Step 301: the user accesses the WIMAX network;
Step 302: the user moves from the current Serving BS to the handover Target BS in the identical ASN, and performs the message interaction process before setting up the handover path.
Step 303: the Target BS sends the handover path setup request to the DPF.
Step 304: the DPF sends the handover path setup response to the Target BS.
Step 305: since the AGW actively cancels user (self policy triggers the cancelling of the user) or AGW passively triggers a disconnection (receiving the request for cancelling the user from the AAA, HA or BS), the DPF and Serving BS perform the disconnection interaction, and release the resources of the users.
Step 306: the Target BS sends the handover path confirmation.

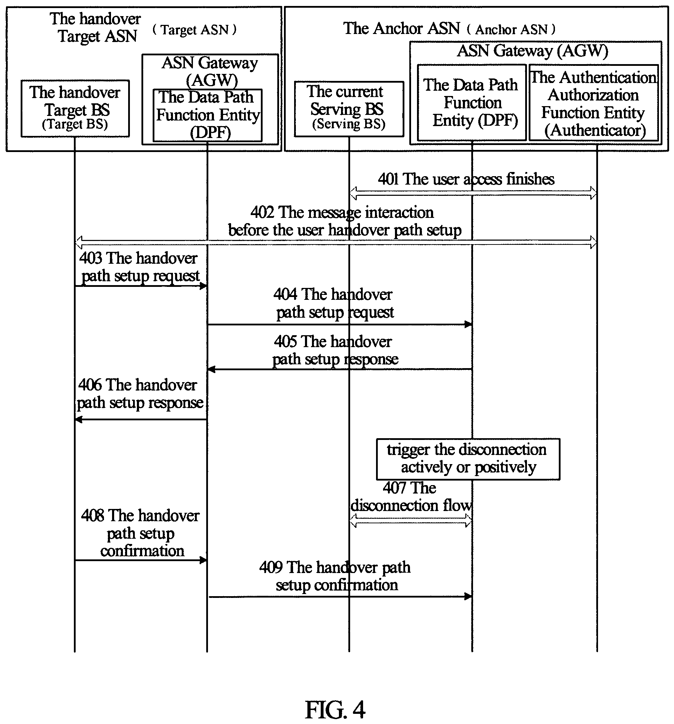

FIG. 4 is the flow schematic diagram of the network side triggering a disconnection in the process of a user handing over in the different ASNs in the prior art, as shown in FIG.4, in the process of a user handing over in the different ASNs, the network side triggering a disconnection comprises the following steps:
Step 401: the user access the WIMAX network.
Step 402: the user moves from the Serving BS to the Target BS in the other ASN, and performs the message interaction process before setting up the handover path.
Step 403: the Target BS in the handover Target ASN sends the handover path setup request to the DPF in Target ASN.
Step 404: the DPF in Target ASN sends the handover path setup request to the DPF in Anchor ASN.
Step 405: the DPF in Anchor ASN sends the handover path setup response to the DPF in Target ASN.
Step 406: the DPF in Target ASN sends the handover path setup response to the Target BS in Target ASN.
Step 407: the DPF in Anchor ASN actively or passively triggers a disconnection, and performs the disconnection flow interaction with the Serving BS in Anchor ASN, and releases the resources of the users.
Step 408: the Target BS in the Target ASN sends the handover path setup confirmation to the DPF in Target ASN.
Step 409: the DPF in Target ASN sends the handover path setup confirmation to the DPF in Anchor ASN.

It can be seen that in the situation shown in FIG. 3, when the network side triggers a disconnection, the DPF in Anchor ASN only performs a disconnection flow interaction with the Serving BS, and releases the corresponding the resources of the users, in this way, the corresponding resources of the users on the Target BS can not be released, thereby lead to the resources hang and the system resource waste. Furthermore, in the situation shown in FIG.4, when the network side triggers a disconnection, the DPF in Anchor ASN only performs a disconnection flow interaction with the Serving BS, and releases the corresponding resources of the users, in this way, the Target BS in the Target ASN and the corresponding resources of the users in the DPF can not be released, thereby lead to the resources hang and the system resource waste. Chinese patent application CN101640912 is further prior art.

### Summary of the Invention

In view of this, the main aim of the present invention is to provide a processing method and system for the network side triggering a disconnection in the handover process, in the situation of the network side triggering a disconnection in the handover process, the resources of the users can be released in time, thereby the resources of the system is saved.

In order to achieve this aim, the technical scheme of the present invention is realized as the following:
A processing method for the network side triggering a disconnection in the handover process, which comprises: the network side triggering a disconnection in the process of a user handing over in an identical Access Service Network (ASN), then the path management function entity (DPF) in the ASN sending the disconnection request to the current Serving Base Station (Serving BS) and the handover Target Base Station (Target BS) to perform the a disconnection interaction.

In the process of the user handing over in the identical ASN, the network side triggering a disconnection refers to: in the period from the time that the user moves and after the system has finished the message interaction flow before setting up the handover path to the time before the Target BS sends the handover path confirmation to the DPF in the identical ASN, the network side triggering a disconnection.

A processing method for the network side triggering a disconnection in the handover process, which comprises: in the process of the user handing over in the different ASNs, the network side triggering a disconnection, and the DPF in the Anchor Access Service Network (Anchor ASN) sending the disconnection request to the Serving BS and the handover Target Access Service Network (Target ASN), and performing the a disconnection interaction.

In the process of the user handing over in the different ASNs, the network side triggering a disconnection refers to: in the period from the time that the user moves and after the system has finished the message interaction flow before setting up the handover path to the time before the DPF in the Target ASN sends the confirmation to the DPF in the Anchor ASN, or, in the period from the time that the user moves and after the system has finished the message interaction flow before setting up the handover path to the time before the DPF in the Anchor ASN does not receive the handover path confirmation, the network side triggering a disconnection.

The DPF in the Anchor ASN sending the disconnection request to the Target ASN, and performing the a disconnection interaction refers to: after the DPF in the Anchor ASN sends the disconnection request to the DPF in the Target ASN to perform the a disconnection interaction, the DPF in the Target ASN performing the interaction with Target BS in the Target ASN.

A processing system for network side triggering a disconnection in the handover process, which comprises: a Data Path Function Entity (DPF), a current Serving Base Station (Serving BS) and a handover Target Base Station (Target BS), the DPF, the Serving BS, the Target BS locating in an identical Access Service Network (ASN), wherein,
the DPF is used to send the disconnection request to the Serving BS and the Target BS in the situation of the network side triggering a disconnection in the process of the user handing over in the ASN, and perform the a disconnection interaction;
the Serving BS is used to perform the corresponding disconnection interaction according to the disconnection request from the DPF;
the Target BS is used to perform the corresponding disconnection interaction according to the disconnection request from the DPF.

In the process of the user handing over in the identical ASN, the network side triggering a disconnection refers to: in the period from the time that the user moves and after the system has finished the message interaction flow before setting up the handover path to the time before the Target BS sends the handover path confirmation to the DPF in the identical ASN, the network side triggering a disconnection.

A processing system for the network side triggering a disconnection in the handover process, which comprises: a first DPF, a Serving BS and a Target ASN, wherein the first DPF is located in the Anchor ASN,
the first DPF is used to send the disconnection request to the Serving BS and the Target ASN to perform the a disconnection interaction in the situation of the network side triggering a disconnection in the process of the user handing over in the different ASNs;
the Serving BS is used to perform the corresponding disconnection interaction according to the disconnection request from the first DPF;
the Target ASN is used to perform the corresponding disconnection interaction according to the disconnection request from the first DPF.

In the process of the user handing over in the different ASNs, the network side triggering a disconnection refers to: in the period from the time that the user moves and after the system has finished the message interaction flow before setting up the handover path to the time before the DPF in the Target ASN sends the confirmation to the DPF in the Anchor ASN, or, in the period from the time that the user moves and after the system has finished the message interaction flow before setting up the handover path to the time before the DPF in the Anchor ASN does not receive the handover path confirmation, the network side triggering a disconnection.

The Target ASN comprises a Target BS and a second DPF, the first DPF sending the disconnection request to the Target ASN to perform the a disconnection interaction refers to: the first DPF sending the disconnection request to the second DPF to perform the a disconnection interaction, then the second DPF performing the interaction with the Target BS.

In the processing method and system for the network side triggering a disconnection in the handover process of the present invention, in the process of the user handing over in the identical ASN, the network side triggers a disconnection, then the DPF not only sends the disconnection request to the Serving BS to perform the a disconnection interaction but also sends the disconnection request to the Target BS to perform the a disconnection interaction; in the process of the user handing over in the different ASNs, the network side triggers a disconnection, then the DPF in the Anchor ASN not only sends the disconnection request to the Serving BS to perform the a disconnection interaction but also sends the disconnection request to the Target ASN to perform the a disconnection interaction. When the network side triggers a disconnection in the process of the user handing over in the identical ASN, the present invention can make the corresponding resources of the users on the Target BS be released in time, and when the network side triggers a disconnection in the process of the user handing over in the different ASNs, the present invention can make the corresponding resources of the users on the Target ASN be released in time, therefore, the present invention can release the resources of the users in time and save the resources of the system when the network side triggers a disconnection in the handover process.

### Brief Description of Drawings

FIG. 1 is a schematic diagram of the system architecture of the prior WIMAX system;
FIG 2 is a structural schematic diagram of the prior access serving network;
FIG 3 is a schematic diagram of a processing flow of the network side triggering a disconnection in the process of a user handing over in an identical ASN in the prior art;
FIG. 4 is a flow schematic diagram of the network side triggering a disconnection in the process of a user handing over in the different ASNs in the prior art;
FIG 5 is a schematic diagram of a processing flow of the network side triggering a disconnection in the process of a user handing over in an identical ASN in the present invention;
FIG. 6 is a schematic diagram of a processing flow of the network side triggering a disconnection in the process of a user handing over in the different ASNs in the present invention;
FIG 7 is a flow schematic diagram of the processing method of the network side triggering a disconnection in the example 1 of the present invention;
FIG. 8 is a flow schematic diagram of the processing method of the network side triggering a disconnection in the example 2 of the present invention.

### Preferred Examples of the Present Invention

The basic concept of the present invention is: the network side triggers a disconnection in the process of a user handing over in an identical ASN, then a DPF not only sends the disconnection request to the Serving BS to perform the a disconnection interaction but also sends the disconnection request to the Target BS to perform the a disconnection interaction; the network side triggers a disconnection in the process of a user handing over in the different ASNs, then a DPF in the Anchor ASN not only sends the disconnection request to the Serving BS to perform the a disconnection interaction but also sends the disconnection request to the Target ASN to perform the a disconnection interaction.

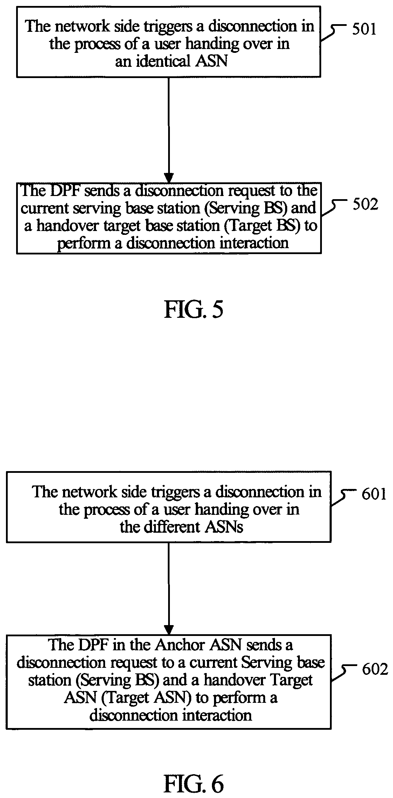

FIG. 5 is a schematic diagram of the processing flow of the network side triggering a disconnection in the process of a user handing over in an identical ASN of the present invention, as shown in FIG. 5, the processing method for the network side triggering a disconnection in the process of a user handing over in the identical ASN in the present invention comprises the following steps:
Step 501: in the process of the user handing over in the identical ASN, the network side triggers a disconnection.

Herein, the network side triggering a disconnection in the process of the user handing over in the identical ASN refers to: in the period from the time that the user moves and after the system has finished the message interaction flow before setting up the handover path to the time before the Target BS sends the handover path confirmation to the DPF in the identical ASN, the network side triggering a disconnection.

Step 502: the DPF in the ASN sends the disconnection request to the Serving BS and the Target BS to perform the disconnection interaction.

In the process of the DPF performing the disconnection interaction with the Serving BS and the Target BS, the Serving BS and the Target BS can release the corresponding resources of the users, and the waste of the network resources will be avoided.

FIG 6 is a schematic diagram of the processing flow of the network side triggering a disconnection in the process of a user handing over in the different ASNs of the present invention, as shown in FIG. 6, the processing methods for the network side triggering a disconnection in the process of a user handing over in the different ASNs comprises the following steps:
Step 601: in the process of a user handing over in the different ASNs, the network side triggers a disconnection.

Herein, in the process of a user handing over in the different ASNs, the network side triggering a disconnection refers to: in the period from the time that the user moves and after the system has finished the message interaction flow before setting up the handover path to the time before the DPF in the Target ASN sends the confirmation to the DPF in the Anchor ASN, or, in the period from the time that the user moves and after the system has finished the message interaction flow before setting up the handover path to the time before the DPF in the Anchor ASN does not receive the handover path confirmation, the network side triggering a disconnection.

Step 602: the DPF in the Anchor ASN sends the disconnection request to the Serving BS and the Target BS to perform the a disconnection interaction.

Herein, the DPF in the Anchor ASN sending the disconnection request to the Target BS generally refers to: the DPF in the Anchor ASN sending a disconnection request to the DPF in the Target ASN to perform the a disconnection interaction, after that, the DPF in the Target ANS and the Target BS in the Target ASN can perform the interaction, so that the Target BS can release the corresponding information of the users promptly.

In the process of the DPF in the Anchor ASN performing the a disconnection interaction with the Serving BS and the Target ASN, the Serving BS and the Target ASN can release the corresponding resources of the users, and the waste of the network resources will be avoided.

The present invention also discloses a processing system for the network side triggering a disconnection in a handover process, comprising: a DPF, a Serving BS and a Target BS, the DPF, wherein the Serving BS and the Target BS are located in an identical ASN, wherein,
the DPF is used to send a disconnection request to the Serving BS and the Target BS to perform a disconnection interaction when the network side triggers a disconnection in the process of a user handing over in the ASN;
the Serving BS is used to perform the corresponding disconnection interaction according to the disconnection request from the DPF;
the Target BS is used to perform the corresponding disconnection interaction according to the disconnection request from the DPF.

In the process of the user handing over in the identical ASN, the network side triggering a disconnection refers to: in the period from the time that the user moves and after the system has finished the message interaction flow before setting up the handover path to the time before the Target BS sends the handover path confirmation to the DPF in the identical ASN, the network side triggering a disconnection.

The present invention also discloses a processing system for the network side triggering a disconnection in a handover process, comprising: a first DPF, a Serving BS and a Target ASN, wherein the first DPF is located in an Anchor ASN,
the first DPF is used to send a disconnection request to the Serving BS and the Target ASN to perform the a disconnection interaction when the network side triggers a disconnection in the process of a user handing over in the different ASNs;
the Serving BS is used to perform the corresponding disconnection interaction according to the disconnection request from the first DPF;
the Target ASN is used to perform the corresponding a disconnection interaction according to the disconnection request from the first DPF.

In the process of the user handing over in the different ASNs, the network side triggering a disconnection refers to: in the period from the time that the user moves and after the system has finished the message interaction flow before setting up the handover path to the time before the DPF in the Target ASN sends the confirmation to the DPF in the Anchor ASN, or, in the period from the time that the user moves and after the system has finished the message interaction flow before setting up the handover path to the time before the DPF in the Anchor ASN does not receive the handover path confirmation, the network side triggering a disconnection.

The Target ASN comprises a Target BS and a second DPF; the first DPF sending a disconnection request to the Target ASN to perform the a disconnection interaction refers to: the first DPF sending a disconnection request to the second DPF to perform the a disconnection interaction, then the second DPF performing interaction with the Target BS.

Combined with the specific examples, the technical scheme will be further described in details as the following.

### Example 1

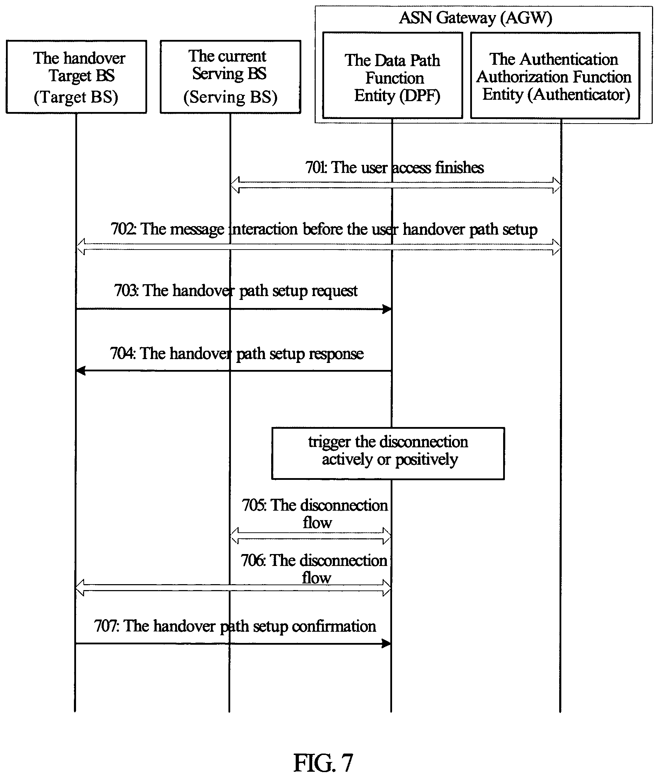

In the example, the network side triggers a disconnection in the process of a user handover in an identical ASN, specifically, after the DPF returns the handover path setup response according to the handover path setup request sent by the Target BS and before receiving the handover path setup confirmation of the Target BS, the network side triggers a disconnection. FIG. 7 is a flow schematic diagram of the processing method for the network side triggering a disconnection in the example 1 of the present invention, as shown in FIG 7, the processing method for the network side triggering a disconnection in the example 1 the of the present invention comprises:
Step 701: the user accesses the WIMAX network.
Step 702: the user moves from the Serving BS to the Target BS in the identical ASN, and performs the message interaction process before the setup of the handover path.
Step 703: the Target BS sends a handover path setup request to the DPF.
Step 704: the DPF sends a handover path setup response to Target BS.
step 705: since the AGW cancels user actively (self policy triggers the cancelling of the user) or the AGW triggers a disconnection passively (receiving the request for cancelling user of AAA, or HA or BS), the DPF and the Serving BS perform the disconnection interaction, and release the resources of the users.
Step 706: the DPF and the Target BS perform the disconnection interaction and release the resources of the users.

What is need to explain is, the disconnection interaction between the DPF and the Serving BS, and between the DPF and the Target BS have no limitation on the orders.

Step 707: the Target BS sends the handover path confirmation.

### Example 2

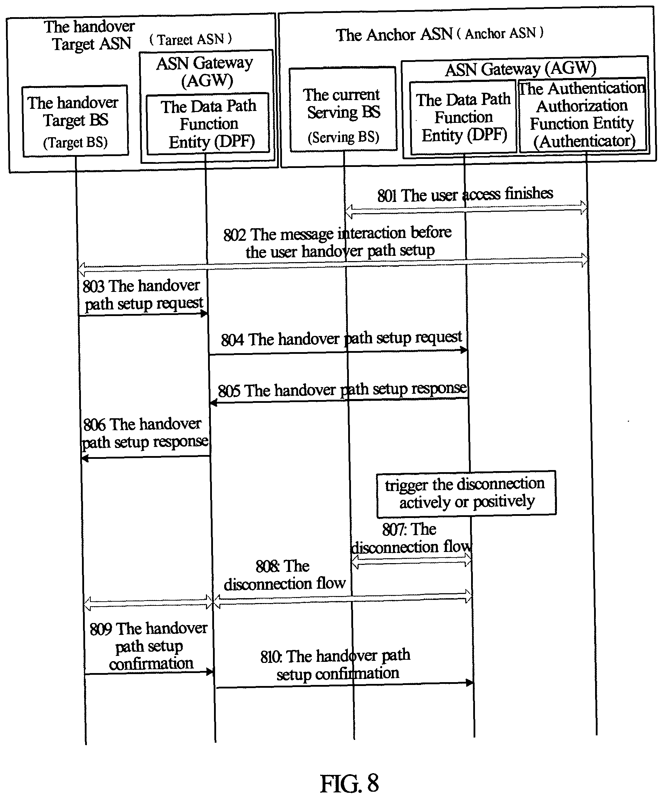

In the example, the network side triggers a disconnection in the process of a user handing over in the different ASNs, specifically, after the DPF in the Anchor ASN returns the handover path setup response according to the handover path setup request sent by the Target ASN and before receiving the handover path setup confirmation of the Target ASN, the network side triggers a disconnection. FIG. 8 is a flow schematic diagram of the processing method for the network side triggering a disconnection in the example 2 of the present invention; as shown in FIG. 8, the processing method for the network side triggering a disconnection in example 2 of the present invention comprises:
Step 801: the user accesses the WIMAX network.
Step 802: the user moves from the Serving BS in the Anchor ASN to the Target BS in the Target ASN, and performs the message interaction process before the handover path setup.
Step 803: the Target BS sends a handover path setup request to the DPF in the Target ASN.
Step 804: the DPF in the Target ASN sends a handover path setup request to the DPF in the Anchor ASN.
Step 805: the DPF in the Anchor ASN sends a handover path setup response to the DPF in the Target ASN.
Step 806: the DPF in the ASN sends a handover path setup response to the Target BS in the Target ASN.
Step 807: the DPF in the Anchor ASN triggers a disconnection actively or passively, and performs the disconnection flow interaction with the Serving BS in the Anchor ASN to release the resources of the users.
Step 808: the DPF in the Anchor ASN performs the disconnection flow interaction with the Target ASN and release the resources of the users.
Step 809: the Target BS in the Target ASN sends a handover path setup confirmation to the DPF in the Target ASN.
Step 810: the DPF in the Target ASN sends a handover path setup confirmation to the DPF in the Anchor ASN.

Through the description of the above examples, it can be seen that the scheme provided by the present invention uses the flow of the prior scheme sufficiently, by adding the message interaction of the disconnection flow between the network elements, it is easily realized, and efficiently guarantees that the resources of the users is released in the process of the user handing over, thereby avoiding the result of the user data blocking caused by the resources of the users hanging, therefore, compared with the prior art, in the present invention, the way that the present message flow interacts among all function entities of ASN can efficiently guarantee the resources of the users to be released rightly when the network side triggers a disconnection in the process of the user handing over and does not waste network resources.

What is said above is only the preferred examples of the present invention, and is not used to limit the scope of protection of the present invention.

## Claims

1. A processing method for a network side triggering a disconnection in a handover process, comprising: a network side triggering a disconnection in a process of a user handing over in an identical Access Service Network (ASN), then a path management function entity (DPF) in the ASN sending a disconnection request to a current Serving Base Station (Serving BS) and a handover Target Base Station (Target BS) to perform the disconnection interaction.

2. The method according to claim 1, wherein, in the process of the user handing over in the identical ASN, the network side triggering the disconnection refers to: in a period from a time that the user moves and after a system has finished a message interaction flow before setting up a handover path to a time before the Target BS sends a handover path confirmation to the DPF in the identical ASN, the network side triggering the disconnection.

3. A processing method for a network side triggering a disconnection in a handover process, comprising: in a process of a user handing over in different Access Service Networks (ASNs), a network side triggering a disconnection, then a path management function entity (DPF) in an Anchor Access Service Network (Anchor ASN) sending a disconnection request to a Serving Base Station (BS) and a handover Target Access Service Network (Target ASN), and performing the disconnection interaction.

4. The method according to claim 3, wherein, in the process of the user handing over in the different ASNs, the network side triggering the disconnection refers to: in a period from a time that the user moves and after a system has finished a message interaction flow before setting up a handover path to a time before the DPF in the Target ASN sends a confirmation to the DPF in the Anchor ASN, or, in a period from a time that the user moves and after a system has finished a message interaction flow before setting up the handover path to a time before the DPF in the Anchor ASN does not receive the handover path confirmation, the network side triggering the disconnection.

5. The method according to claim 3, wherein, the DPF in the Anchor ASN sending the disconnection request to the Target ASN, and performing the disconnection interaction refers to:
after the DPF in the Anchor ASN sends the disconnection request to the DPF in the Target ASN to perform the disconnection interaction, the DPF in the Target ASN interacting with the Target BS in the Target ASN.

6. A processing system for a network side triggering a disconnection in a handover process, comprising: a Data Path Function Entity (DPF), a current Serving Base Station (Serving BS) and a handover Target Base Station (Target BS), wherein the DPF, the Serving BS, the Target BS are located in an identical Access Service Network (ASN), wherein,
the DPF is used to send a disconnection request to a Serving BS and a Target BS in a situation of a network side triggering a disconnection in a process of a user handing over in an ASN, and perform the disconnection interaction;
the Serving BS is used to perform the corresponding disconnection interaction according to the disconnection request from the DPF;
the Target BS is used to perform the corresponding disconnection interaction according to the disconnection request from the DPF.

7. The system according to claim 6, wherein, in the process of the user handing over in the identical ASN, the network side triggering the disconnection refers to: in a period from a time that the user moves and after a system has finished a message interaction flow before setting up a handover path to a time before the Target BS sends a handover path confirmation to the DPF in the identical ASN, the network side triggering the disconnection.

8. A processing system for a network side triggering a disconnection in a handover process, comprising: a first Data Path Function Entity (DPF), a Serving Base Station (BS) and a Target Access Service Network (ASN), wherein the first DPF is located in an Anchor ASN, wherein
the first DPF is used to send a disconnection request to the Serving BS and the Target ASN to perform the disconnection interaction in a situation of a network side triggering a disconnection in a process of a user handing over in different ASNs;
the Serving BS is used to perform the corresponding disconnection interaction according to the disconnection request from the first DPF;
the Target ASN is used to perform the corresponding disconnection interaction according to the disconnection request from the first DPF.

9. The system according to claim 8, wherein, in the process of the user handing over in the different ASNs, the network side triggering the disconnection refers to: in a period from a time that the user moves and after a system has finished a message interaction flow before setting up a handover path to a time before the DPF in the Target ASN sends a confirmation to the DPF in the Anchor ASN, or, in a period from a time that the user moves and after the system has finished the message interaction flow before setting up the handover path to a time before the DPF in the Anchor ASN does not receive the handover path confirmation, the network side triggering the disconnection.

10. The system according to claim 8, wherein, the Target ASN comprises a Target BS and a second DPF, the first DPF sending the disconnection request to the Target ASN to perform the disconnection interaction refers to: the first DPF sending the disconnection request to the second DPF to perform the disconnection interaction, then the second DPF interacting with the Target BS.

## Patentansprüche

1. Verarbeitungsverfahren zum netzwerkseitigen Auslösen einer Unterbrechung in einem Übergabeprozess, umfassend, dass: eine Netzwerkseite eine Unterbrechung in einem Prozess einer Nutzerübergabe in einem identischen Zugriffsdienstnetzwerk (ASN) auslöst, dann eine Pfadmanagementfunktionsentität (DPF) in dem ASN eine Unterbrechungsanforderung an eine aktuelle bedienende Basisstation (bedienende BS) und an eine Übergabe-Zielbasisstation (Ziel-BS) sendet, um die Unterbrechungsinteraktion durchzuführen.

2. Verfahren nach Anspruch 1, wobei sich bei dem Prozess der Nutzerübergabe in dem identischen ASN das netzwerkseitige Auslösen der Unterbrechung darauf bezieht, dass: in einer Zeitspanne von einem Zeitpunkt an, an dem sich der Nutzer bewegt und nachdem ein System einen Botschafteninteraktionsfluss vor Einrichtung eines Übergabepfads beendet hat, bis zu einem Zeitpunkt, bevor die Ziel-BS eine Bestätigung des Übergabepfads an die DPF in dem identischen ASN sendet, die Netzwerkseite die Unterbrechung auslöst.

3. Verarbeitungsverfahren zum netzwerkseitigen Auslösen einer Unterbrechung in einem Übergabeprozess, umfassend, dass: eine Netzwerkseite eine Unterbrechung in einem Prozess einer Nutzerübergabe in verschiedenen Zugriffsdienstnetzwerken (ASNs) auslöst, dann eine Pfadmanagementfunktionsentität (DPF) in einem Anker-Zugriffsdienstnetzwerk (Anker-ASN) eine Unterbrechungsanforderung an eine bedienende Basisstation (BS) und an ein Übergabe-Zielzugriffsdienstnetzwerk (Ziel-ASN) sendet und die Unterbrechungsinteraktion durchführt.

4. Verfahren nach Anspruch 3, wobei sich in dem Prozess der Nutzerübergabe in den verschiedenen ASNs das netzwerkseitige Auslösen der Unterbrechung darauf bezieht, dass: in einer Zeitspanne von einem Zeitpunkt an, an dem sich der Nutzer bewegt und nachdem ein System einen Botschafteninteraktionsfluss vor Einrichtung eines Übergabepfads beendet hat, bis zu einem Zeitpunkt, bevor die DPF in dem Ziel-ASN eine Bestätigung an die DPF in dem Anker-ASN sendet, oder in einer Zeitspanne von einem Zeitpunkt an, an dem sich der Nutzer bewegt und nachdem ein System einen Botschafteninteraktionsfluss vor Einrichtung eines Übergabepfads beendet hat, bis zu einem Zeitpunkt, bevor die DPF in dem Anker-ASN die Bestätigung des Übergabepfads nicht empfängt, die Netzwerkseite die Unterbrechung auslöst.

5. Verfahren nach Anspruch 3, wobei die DPF in dem Anker-ASN die Unterbrechungsanforderung an das Ziel-ASN sendet, und sich das Merkmal, dass die Unterbrechungsinteraktion durchgeführt wird, darauf bezieht, dass:
nachdem die DPF in dem Anker-ASN die Unterbrechungsanforderung an die DPF in dem Ziel-ASN gesendet hat, um die Unterbrechungsinteraktion durchzuführen, die DPF in dem Ziel-ASN mit der Ziel-BS in dem Ziel-ASN interagiert.

6. Verarbeitungssystem zum netzwerkseitigen Auslösen einer Unterbrechung in einem Übergabeprozess, umfassend: eine Datenpfadfunktionsentität (DPF), eine aktuelle bedienende Basisstation (bedienende BS) und eine Übergabe-Zielbasisstation (Ziel-BS), wobei sich die DPF, die bedienende BS und die Ziel-BS in einem identischen Zugriffsdienstnetzwerk (ASN) befinden, wobei
die DPF verwendet wird, um eine Unterbrechungsanforderung an eine bedienende BS und eine Ziel-BS in einer Situation zu senden, in der eine Netzwerkseite eine Unterbrechung in einem Prozess einer Nutzerübergabe in einem ASN auslöst, und um die Unterbrechungsinteraktion durchzuführen;
die bedienende BS verwendet wird, um die entsprechende Unterbrechungsinteraktion in Übereinstimmung mit der Unterbrechungsanforderung von der DPF durchzuführen;
die Ziel-BS verwendet wird, um die entsprechende Unterbrechungsinteraktion in Übereinstimmung mit der Unterbrechungsanforderung von der DPF durchzuführen.

7. System nach Anspruch 6, wobei sich bei dem Prozess der Nutzerübergabe in dem identischen ASN das Merkmal, dass die Netzwerkseite die Unterbrechung auslöst, darauf bezieht, dass: in einer Zeitspanne von einem Zeitpunkt an, an dem sich der Nutzer bewegt und nachdem ein System einen Botschafteninteraktionsfluss vor Einrichtung eines Übergabepfads beendet hat, bis zu einem Zeitpunkt, bevor die Ziel-BS eine Bestätigung des Übergabepfads an die DPF in dem identischen ASN sendet, die Netzwerkseite die Unterbrechung auslöst.

8. Verarbeitungssystem zum netzwerkseitigen Auslösen einer Unterbrechung in einem Übergabeprozess, umfassend: eine erste Datenpfadfunktionsentität (DPF), eine bedienende Basisstation (BS) und ein ZielZugriffsdienstnetzwerk (ASN), wobei sich die erste DPF in einem Anker-ASN befindet, wobei
die erste DPF verwendet wird, um eine Unterbrechungsanforderung an die bedienende BS und an das Ziel-ASN zu senden, um die Unterbrechungsinteraktion in einer Situation durchzuführen, bei der eine Netzwerkseite eine Unterbrechung in einem Prozess einer Nutzerübergabe in verschiedenen ASNs auslöst;
die bedienende BS verwendet wird, um die entsprechende Unterbrechungsinteraktion in Übereinstimmung mit der Unterbrechungsanforderung von der ersten DPF durchzuführen;
das Ziel-ASN verwendet wird, um die entsprechende Unterbrechungsinteraktion in Übereinstimmung mit der Unterbrechungsanforderung von der ersten DPF durchzuführen.

9. System nach Anspruch 8, wobei sich in dem Prozess der Nutzerübergabe in den verschiedenen ASNs das Merkmal, dass die Nerzwerkseite die Unterbrechung auslöst, darauf bezieht, dass: in einer Zeitspanne von einem Zeitpunkt an, an dem sich der Nutzer bewegt und nachdem ein System einen Botschafteninteraktionsfluss vor Einrichtung eines Übergabepfads beendet hat, bis zu einem Zeitpunkt, bevor die DPF in dem Ziel-ASN eine Bestätigung an die DPF in dem Anker-ASN sendet, oder in einer Zeitspanne von einem Zeitpunkt an, an dem sich der Nutzer bewegt und nachdem das System den Botschafteninteraktionsfluss vor Einrichtung eines Übergabepfads beendet hat, bis zu einem Zeitpunkt, bevor die DPF in dem Anker-ASN die Bestätigung des Übergabepfads nicht empfängt, die Netzwerkseite die Unterbrechung auslöst.

10. System nach Anspruch 8, wobei das Ziel-ASN eine Ziel-BS und eine zweite DPF umfasst, wobei sich das Merkmal, dass die erste DPF die Unterbrechungsanforderung an das Ziel-ASN sendet, um die Unterbrechungsinteraktion durchzuführen, darauf bezieht, dass: die erste DPF die Unterbrechungsanforderung an die zweite DPF sendet, um die Unterbrechungsinteraktion durchzuführen, und dann die zweite DPF mit der Ziel-BS interagiert.

## Revendications

1. Procédé de traitement pour un côté réseau déclenchant une déconnexion dans un processus de transfert, comprenant le fait : de déclencher, par le biais d'un côté réseau, une déconnexion dans un processus d'un transfert d'utilisateur dans un Réseau de Service d'Accès (ASN) identique, puis d'envoyer, par le biais d'une entité à fonction de gestion de chemin (DPF) dans l'ASN, une demande de déconnexion à une Station de Base de Desserte actuelle (BS de Desserte) et à une Station de Base Cible de transfert (BS Cible) pour réaliser l'interaction de déconnexion.

2. Procédé selon la revendication 1, dans lequel, dans le processus du transfert d'utilisateur dans l'ASN identique, le côté réseau déclenchant la déconnexion fait référence à : dans une période entre un moment où l'utilisateur se déplace et après qu'un système a terminé un flux d'interactions de messages avant l'établissement d'un chemin de transfert et un moment avant que la BS Cible n'envoie une confirmation de chemin de transfert à la DPF dans l'ASN identique, le côté réseau déclenchant la déconnexion.

3. Procédé de traitement pour un côté réseau déclenchant une déconnexion dans un processus de transfert, comprenant le fait : dans un processus d'un transfert d'utilisateur dans différents Réseaux de Service d'Accès (ASN), de déclencher, par le biais d'un côté réseau, une déconnexion, puis d'envoyer, par le biais d'une entité à fonction de gestion de chemin (DPF) dans un Réseau de Service d'Accès d'Ancrage (ASN d'Ancrage), une demande de déconnexion à une Station de Base de Desserte (BS) et à un Réseau de Service d'Accès Cible de transfert (ASN Cible) et de réaliser l'interaction de déconnexion.

4. Procédé selon la revendication 3, dans lequel, dans le processus du transfert d'utilisateur dans les différents ASN, le côté réseau déclenchant la déconnexion fait référence à : dans une période entre un moment où l'utilisateur se déplace et après qu'un système a terminé un flux d'interactions de messages avant l'établissement d'un chemin de transfert et un moment avant que la DPF dans l'ASN Cible n'envoie une confirmation à la DPF dans l'ASN d'Ancrage, ou, dans une période entre un moment où l'utilisateur se déplace et après qu'un système a terminé un flux d'interactions de messages avant l'établissement du chemin de transfert et un moment avant la non-réception de la confirmation de chemin de transfert par la DPF de l'ASN d'Ancrage, le côté réseau déclenchant la déconnexion.

5. Procédé selon la revendication 3, dans lequel, la DPF dans l'ASN d'Ancrage envoyant la demande de déconnexion à l'ASN Cible, et réalisant l'interaction de déconnexion fait référence à : après que la DPF dans l'ASN d'Ancrage envoie la demande de déconnexion à la DPF dans l'ASN Cible pour réaliser l'interaction de déconnexion, la DPF dans l'ASN Cible interagissant avec la BS Cible dans l'ASN Cible.

6. Système de traitement pour un côté réseau déclenchant une déconnexion dans un processus de transfert, comprenant : une Entité à Fonction de Chemin de Données (DPF), une Station de Base de Desserte actuelle (BS de Desserte) et une Station de Base Cible de transfert (BS Cible), où la DPF, la BS de Desserte, et la BS Cible sont situées dans un Réseau de Service d'Accès (ASN) identique, où
la DPF est utilisée pour envoyer une demande de déconnexion à une BS de Desserte et à une BS Cible dans une situation où un côté réseau déclenche une déconnexion dans un processus d'un transfert d'utilisateur dans un ASN, et pour réaliser l'interaction de déconnexion ;
la BS de Desserte est utilisée pour réaliser l'interaction de déconnexion correspondante selon la demande de déconnexion provenant de la DPF ;
la BS Cible est utilisée pour réaliser l'interaction de déconnexion correspondante selon la demande de déconnexion provenant de la DPF.

7. Système selon la revendication 6, dans lequel, dans le processus du transfert d'utilisateur dans l'ASN identique, le côté réseau déclenchant la déconnexion fait référence à : dans une période entre un moment où l'utilisateur se déplace et après qu'un système a terminé un flux d'interactions de messages avant l'établissement d'un chemin de transfert et un moment avant que la BS Cible n'envoie une confirmation de chemin de transfert à la DPF dans l'ASN identique, le côté réseau déclenchant la déconnexion.

8. Système de traitement pour un côté réseau déclenchant une déconnexion dans un processus de transfert, comprenant : une première Entité à Fonction de Chemin de Données (DPF), une Station de Base de Desserte (BS) et un Réseau de Service d'Accès Cible (ASN), où la première DPF est située dans un ASN d'Ancrage, où
la première DPF est utilisée pour envoyer une demande de déconnexion à la BS de Desserte et à l'ASN Cible pour réaliser l'interaction de déconnexion dans une situation où un côté réseau déclenche une déconnexion dans un processus d'un transfert d'utilisateur dans différents ASN ;
la BS de Desserte est utilisée pour réaliser l'interaction de déconnexion correspondante selon la demande de déconnexion provenant de la première DPF ;
l'ASN Cible est utilisé pour réaliser l'interaction de déconnexion correspondante selon la demande de déconnexion provenant de la première DPF.

9. Système selon la revendication 8, dans lequel, dans le processus du transfert d'utilisateur dans les différents ASN, le côté réseau déclenchant la déconnexion fait référence à : dans une période entre un moment où l'utilisateur se déplace et après qu'un système a terminé un flux d'interactions de messages avant l'établissement d'un chemin de transfert et un moment avant que la DPF dans l'ASN Cible n'envoie une confirmation à la DPF dans l'ASN d'Ancrage, ou, dans une période entre un moment où l'utilisateur se déplace et après que le système a terminé le flux d'interactions de messages avant l'établissement du chemin de transfert et un moment avant la non-réception de la confirmation de chemin de transfert par la DPF dans l'ASN d'Ancrage, le côté réseau déclenchant la déconnexion.

10. Système selon la revendication 8, dans lequel l' ASN Cible comprend une BS Cible et une deuxième DPF, la première DPF envoyant la demande de déconnexion à l'ASN Cible pour réaliser l'interaction de déconnexion fait référence à : la première DPF envoyant la demande de déconnexion à la deuxième DPF pour réaliser l'interaction de déconnexion, puis la deuxième DPF interagissant avec la BS Cible.
